# EUROPÄISCHE PATENTSCHRIFT

(11) **EP 2 123 512 B1**
(45) Veröffentlichungstag und Bekanntmachung des Hinweises auf die Patenterteilung: **31.07.2013**
(21) Anmeldenummer: 08156151.6
(22) Anmeldetag: 14.05.2008
(51) Int. Cl.: B60Q 1/14

(54) **Steuergerät zum Steuern und/oder Regeln einer vertikalen Hell-Dunkel-Grenze**
Control device to control and/or to command a vertical cut-off line
Appareil de commande et/ou de contrôle d'une ligne de coupure verticale

(43) Veröffentlichungstag der Anmeldung: 25.11.2009
(73) Patentinhaber: Hella KGaA Hueck & Co., 59552 Lippstadt (DE)
(72) Erfinder: Schwarz, Sergej, 59557 Lippstadt (DE); Pollert, Markus, 61476 Kronberg (DE); Krause, Stefan, 33775 Versmold (DE)
(74) Vertreter: Downar, Michael

(56) Entgegenhaltungen:
- EP-A- 0 869 031
- EP-A- 1 504 960
- EP-A2- 2 100 769
- WO-A-2008/037388
- DE-A1-102005 038 581
- DE-A1-102005 050 841
- DE-A1-102006 043 281

## Beschreibung

Die Erfindung betrifft ein Steuergerät zum Steuern und/oder Regeln einer vertikalen Hell-Dunkel-Grenze von Hauptscheinwerfern umfassend wenigstens einen rechten und einen linken Kraftfahrzeugscheinwerfer für Fernlicht mit mehreren einstellbaren Fernlicht-Lichtverteilungen mit den Merkmalen des Oberbegriffs des Anspruchs 1.

Steuergeräte werden in großer Vielzahl zur Steuerung und Regelung von Kraftfahrzeugscheinwerfern benutzt. Die bekannten Steuergeräte sind im einfachsten Fall zum manuellen Ein- oder Ausschalten des Fernlichts geeignet. Vielfach können die Steuergeräte jedoch auch Teil eines Fahrassistenzsystems sein, mit dem beispielsweise das Fernlicht automatisch ein- oder ausgeschaltet wird, die horizontale Hell-Dunkel-Grenze des Abblendlichts oder des Fernlichts verschoben werden kann oder die vertikale Hell-Dunkel-Grenze des Fernlichts verschoben werden kann. All diese Maßnahmen dienen einerseits dazu, dem Fahrzeugführer eine möglichst weite Sicht auf die vor ihm liegende Straße zu bieten, und andererseits dazu, einen entgegenkommenden oder vorausfahrenden Fahrzeugführer nicht zu blenden. Das manuelle Ein- oder Ausschalten des Fernlichts wird durch die Fahrassistenzsysteme übernommen. Auch das automatische Kurvenlicht ist ein solches Fahrassistenzsystem, mit welchem die Blendung des entgegenkommenden Fahrzeugs vermieden und dem Fahrzeugführer eine bessere Beleuchtung der vor ihm liegenden Straße geboten wird.

Um erkennen zu können, ob dem Fahrzeug ein anderes Fahrzeug vorausfährt oder entgegenkommt, weisen die Fahrassistenzsysteme Erkennungsmittel wie Kameras auf, welche die Situation vor dem Fahrzeug erfassen. Über Bilderkennung und Bildverarbeitung ist es möglich, mit den Erkennungsmitteln festzustellen, ob dem Fahrzeug ein Kraftfahrzeug vorausfährt oder ein Kraftfahrzeug entgegenkommt. Ist dies der Fall, kann in Abhängigkeit von weiteren Parametern das Fernlicht abgeblendet werden, die vertikale Hell-Dunkel-Grenze verschoben werden oder die horizontale Hell-Dunkel-Grenze verschoben werden.

Die Praxis hat gezeigt, dass es mitunter trotz der Verwendung der Fahrassistenzsysteme zur Steuerung der Beleuchtung des Kraftfahrzeugs zu Situationen kommen kann, in denen der Gegenverkehr oder der vorausfahrende Verkehr geblendet wird.

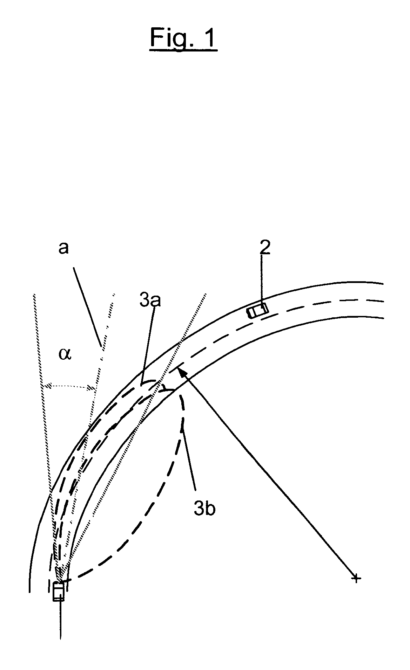

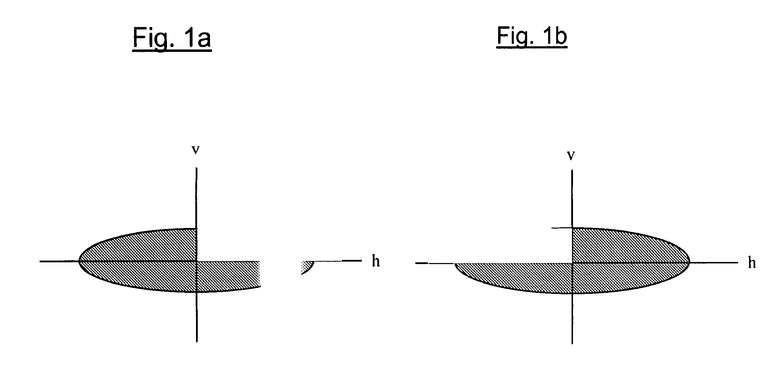

In der
- Fig. 1: ist eine Situation schematisch dargestellt, in der es zur Blendung des vorausfahrenden oder entgegenkommenden Fahrzeugs kommen kann.
- Fig. 1a: zeigt die Verteilung des Lichts des linken Hauptscheinwerfers mit vertikaler Hell-Dunkel-Grenze und
- Fig. 1b: zeigt die Verteilung des Lichts des rechten Hauptscheinwerfers mit vertikaler Hell-Dunkel-Grenze.

In der Figur 1 ist in schematischer Draufsicht die Situation einer Kurvenfahrt durch eine Rechtskurve dargestellt. Das Kraftfahrzeug 1 weist ein Fahrassistenzsystem auf, mit dem das Blenden eines entgegenkommenden Fahrzeugs 2 verhindert werden soll. Das Fahrassistenzsystem umfasst eine Kamera, die eine optische Achse a hat, und die einen Erfassungsbereich hat, dessen rechter Rand im Winkel α von der optischen Achse a abweicht. Das Kraftfahrzeug 1 hat ferner Kurvenlichtscheinwerfer, die aufgrund der Kurvenfahrt durch die dargestellte Rechtskurve nach rechts eingeschwenkt sind. Die Verteilung des von Hauptscheinwerfern des Kraftfahrzeugs erzeugten Fernlichts ist mit den Bezugszeichen 3a, 3b gekennzeichnet und zwar mit 3a die Verteilung des linken Hauptscheinwerfers und mit 3b die Verteilung des rechten Hauptscheinwerfers. In der dargestellten Situation tritt das entgegenkommende Fahrzeug zuerst in den Erfassungsbereich der Kamera ein, dann in den Lichtkegel des Fernlichts der Hauptscheinwerfer. Das Fahrassistenzsystem sorgt dafür, dass nach dem Erkennen des entgegenkommenden Fahrzeugs 2, die Hauptscheinwerfer ein Licht mit einer Lichtverteilung erzeugen, das den Gegenverkehr nicht blendet, oder aber die vertikale Hell-Dunkel-Grenze verschoben wird, damit der Gegenverkehr nicht geblendet wird.

Die Fig. 1 zeigt die Situation in einer Kurve, deren Radius einen Betrag hat, der größer als ein vorbestimmter Wert ist. Bei kleineren Radien, d. h. bei engeren Kurven können dagegen wegen des weiteren Schwenkens der Kurvenlichtscheinwerfer Blendungen des Gegenverkehrs auftreten. In diesen Fällen tritt das entgegenkommende Fahrzeug 2 erst in den Lichtkegel 3a, 3b der Hauptscheinwerfer ein und gelangt erst darauf hin in den Erfassungsbereich der Kamera.

Es ergibt sich also die Situation, dass das entgegenkommende Fahrzeug 2 bereits in den Lichtkegel 3a, 3b des Fernlichts eingetreten ist. Die Lichtverteilung der Fernlichtscheinwerfer ist so, dass der Fahrzeugführer des entgegenkommenden Fahrzeugs 2 geblendet wird. Das Fahrassistenzsystem mit der Kamera hat dagegen das entgegenkommende Kraftfahrzeug 2 noch nicht erfasst. Es kann dieses Kraftfahrzeug 2 nicht erfassen, da es sich außerhalb des Erfassungsbereichs der Kamera des Fahrassistenzsystems befindet.

In dieser Situation kann das Fahrassistenzsystem den Kraftfahrzeugführer nicht wirksam unterstützen, um ein Blenden des Fahrzeugführers des entgegenkommenden Fahrzeugs zu verhindern. Es ist dann nach wie vor ein Eingriff des Kraftfahrzeugführers notwendig, um die Scheinwerfer abzublenden und eine Blendung des Fahrzeugführers des entgegenkommenden Fahrzeugs zu verhindern.

Aus dem Dokument WO 2008/03788 A1 ist ein Steuergerät bekannt, mit dem die vertikale Hell-Dunkel-Grenze von Kraftfahrzeugscheinwerfern eingestellt werden kann. Außerdem ist mit dem Steuergerät die Funktion des Kurvenlichts realisierbar, mit dem die Kraftfahrzeugscheinwerfer so geschwenkt werden, dass sie in eine durchfahrene oder zu durchfahrende Kurve hineinleuchten. Aus dem Dokument ist nicht bekannt, wie eine Blendung des Gegenverkehrs vermieden werden kann, der in den Lichtkegel des Fernlichts eintritt, bevor er von der ersten Erkennungsvorrichtung erfasst werden kann.

Das Dokument EP 0 869 031 A2 offenbart eine Kraftfahrzeugscheinwerferanordnung mit einem Steuergerät, zwei Kraftfahrzeugscheinwerfern und einer Erkennungsvorrichtung zum Erkennen einer vom Kraftfahrzeug zu durchfahrenden oder durchfahrenen Kurve, die für Abblendlicht die Funktion des Kurvenlichts ermöglicht. Das Kurvenlicht ist so realisiert, dass beide Scheinwerfer in die Kurve geschwenkt werden und gleichzeitig die Leuchtweite des kurvenäußeren Scheinwerfers durch Schwenken nach oben erhöht wird. Außerdem ist die offenbarte Anordnung in der Lage Fernlicht automatisch ein- oder auszuschalten. Auch aus diesem Dokument ist nicht bekannt, wie eine Blendung des Gegenverkehrs vermieden werden kann, der bei einer Kurvenfahrt in den Lichtkegel des Fernlichts eintritt, bevor er von der ersten Erkennungsvorrichtung erfasst werden kann.

Hier setzt die vorliegende Erfindung an.

Der vorliegenden Erfindung liegt die Aufgabe zugrunde, ein bekanntes Steuergerät so weiter zu entwickeln, dass ein Blenden des Fahrzeugführers eines entgegenkommenden Fahrzeugs oder eines vorrausfahrenden Fahrzeugs auch dann vermieden wird, wenn aufgrund einer Kurvenfahrt entgegenkommenden oder vorausfahrende Fahrzeug nicht mehr im Erfassungsbereich des Erkennungsmittels des Fahrassistenzsystems ist.

Diese Aufgabe wird erfindungsgemäß dadurch gelöst, dass das Steuergerät eine Schnittstelle zur Verbindung mit einer zweiten Erkennungsvorrichtung zum Erkennen eines Radius einer vom Kraftfahrzeug zu durchfahrenden oder durchfahrenen Kurve aufweist. Ferner ist das erfindungsgemäße Steuergerät geeignet und eingerichtet in Abhängigkeit von einem Signal der zweiten Erkennungsvorrichtung, das den Radius der Kurve signalisiert, ein Stellsignal zu erzeugen, um zur Vermeidung einer Blendung die rechten oder die linken Kraftfahrzeugscheinwerfer für Fernlicht auszuschalten. Gemäß der Erfindung wird somit erreicht, dass Fahrzeuge, die sich zwar im Lichtkegel eines der beiden Fernlichtscheinwerfers befinden können, jedoch nicht von dem ersten Erkennungsmittel erfasst werden, nicht geblendet werden können, da dieser Fernlichtscheinwerfer in einem solchen Fall abgeschaltet ist. Dazu ist es notwendig, dass das Steuergerät den Radius der Kurve kennt, die gerade durchfahren wird oder die in naher Zukunft durchfahren wird. Dieses wird dem Steuergerät von dem zweiten Erkennungsmittel mitgeteilt.

Gemäß der Erfindung kann das Steuergerät eine Schnittstelle oder mehrere Schnittstellen zur Verbindung mit mindestens einem rechten Scheinwerfer für Fernlicht und mit mindestens mit einem linken Scheinwerfer für Fernlicht aufweisen.

Vorzugsweise wird der bei der Kurvenfahrt auf der Innenseite der Kurve liegende Scheinwerfer abgeschaltet. Dazu wird beispielsweise einer Rechtskurve ein positives Vorzeichen zugeordnet und einer Linkskurve ein negatives Vorzeichen. In Abhängigkeit des Vorzeichens des Signals des zweiten Erkennungsmittels kann erkannt werden, ob eine Rechts- oder Linkskurve vorliegt.

Vorteilhaft ist das Steuergerät geeignet und eingerichtet in Abhängigkeit vom Betrag des Kurvenradius, den das Signal der zweiten Erkennungsvorrichtung anzeigt, dass Stellsignal zum Ausschalten des Scheinwerfers oder der Scheinwerfer für das Fernlicht zu erzeugen. Solange der Betrag oberhalb eines vorgebaren Schwellwerts liegt, wird die Einstellung der Hauptscheinwerfer nicht geändert. Erst bei engeren Kurven, d. h. bei einem kleineren Betrag wird das Stellsignal erzeugt.

Das Steuergerät kann auch geeignet und eingerichtet sein, dass Stellsignal zum Ausschalten des Scheinwerfers oder der Scheinwerfer für Fernlicht in Abhängigkeit eines Kamera-Öffnungswinkels des ersten Erkennungsmittels zu erzeugen. Es ist somit möglich, dass nicht nur der Kurvenradius und insbesondere den Betrag des Kurvenradius in den Steuer- oder Regelalgorithmus, der von dem Steuergerät abgearbeitet wird, einfließt, sondern auch ein Parameter, der den Erfassungsbereich und die Grenze des Erfassungsbereichs kennzeichnet.

Der Öffnungswinkel kann entweder als Berechnungsparameter in das Steuergerät eingegeben, dort gespeichert und bei der Erzeugung der Stellgröße verarbeitet werden. Ebenso ist denkbar, dass, falls sich der Öffnungswinkel während des Betriebs des Kraftfahrzeugs ändern kann, über eine Schnittstelle ständig in das Steuergerät eingelesen wird.

Gemäß der Erfindung können über den Öffnungswinkel hinaus ein- oder mehrere Parameter einer oder mehrerer Lichtverteilungen des Scheinwerfers oder der Scheinwerfer für das Fernlicht in dem Steuergerät eingegeben, gespeichert werden und bei der Erzeugung der Stellgröße verarbeitet werden. Die Parameter können bei der Programmierung des Steuergeräts eingegeben werden. Ebenso ist denkbar, dass eine Schnittstelle vorgesehen ist, über welche im Betrieb des Steuergeräts die Parameter zur Lichtverteilung eingelesen werden.

Das Steuergerät kann Teil einer Anordnung sein, die aus dem Steuergerät selbst, der ersten Erkennungsvorrichtung, der zweiten Erkennungsvorrichtung wenigstens einem rechten Scheinwerfer für Fernlicht und wenigstens einem linken Scheinwerfer für Fernwerfer gebildet wird. Die erste Erkennungsvorrichtung kann eine Kamera umfassen, deren Öffnungswinkel als Berechnungsparameter in dem Steuergerät eingegeben, gespeichert ist. Auch die zweite Erkennungsvorrichtung kann eine Kamera umder Erkennungsvorrichtung und die zweite Erkennungsvorrichtung können zu einer einzigen Erkennungsvorrichtung zusammengefasst sein.

Gemäß der Erfindung ist es ferner möglich, dass die zweite Erkennungsvorrichtung einen Lenkwinkelsensor zur Ermittlung des Lenkradeinschlages, einen Gierratensensor zur Ermittlung der Querbeschleunigung und/oder einen Radwinkelsensor zur Feststellung des Vorderradeinschlags aufweisen, und dass aus diesen und gegebenenfalls weiteren Größen der Radius der Kurvenfahrt festgestellt wird.

Das Steuergerät und der bzw. die Scheinwerfer einer erfindungsgemäßen Anordnung können zum Einstellen einer horizontalen Hell-Dunkel-Grenze des bzw. der Scheinwerfer für Fernlicht geeignet und eingerichtet sein. Ebenso kann das Steuergerät zum automatischen Ein- und Ausschalten des Fernlichtscheinwerfers bzw. der Fernlichtscheinwerfer geeignet und eingerichtet sein. Bei einer besonderen Anordnung kann die Lichtverteilung der Scheinwerfer für das Fernlicht sogar durch das Steuergerät eingestellt werden.

Das Steuergerät und der bzw. die Scheinwerfer können für Kurvenlicht geeignet und eingerichtet sein.

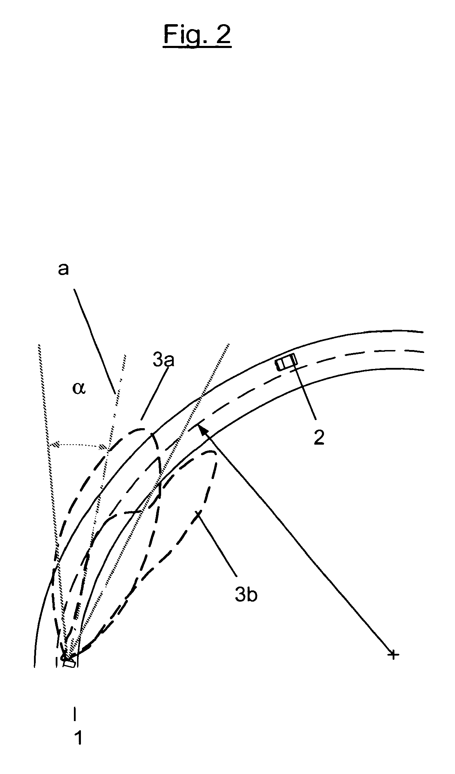

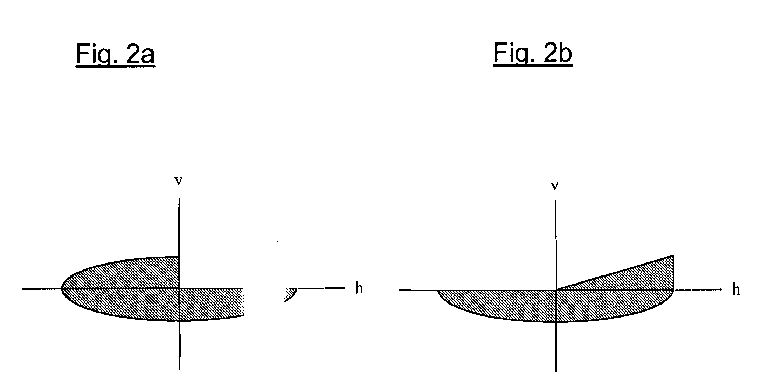

Die Erfindung wird anhand der Figuren 2 bis 2b näher erläutert. Es zeigt
- Fig. 2: schematisch eine Situation, in der kurveninnere Scheinwerfer abgeblendet ist,
- Fig. 2a: die Verteilung des Lichts des linken Hauptscheinwerfers mit vertikaler Hell-Dunkel-Grenze in der Situation nach Fig. 2 und
- Fig. 2b: die Verteilung des Lichts des rechten Hauptscheinwerfers mit Abblendlicht in der Situation nach Fig. 2.

Die in Fig. 2 dargestellte Situation zeigt, wie durch das Abblenden des kurveninnern Hauptscheinwerfers - im vorliegenden Fall der Rechtskurve ist dies der rechte Hauptscheinwerfer - zu einer Entblendung des entgegenkommenden Fahrzeugs kommt.

kennungsmittels ein und bevor es in den Lichtkegels des Fernlichts der Hauptscheinwerfer des Kraftfahrzeugs 1 einträte. Das Fahrassistenzsystem des Kraftfahrzeugs 1 hat daher die Möglichkeit auf den Eintritt des entgegenkommenden Fahrzeugs zu reagieren, ohne dass zu einer Blendung kommt.

### Bezugszeichenliste

- 1: Kraftfahrzeug
- 2: entgegenkommendes Fahrzeug
- 3a: Lichtverteilung des linken Hauptscheinwerfers
- 3b: Lichtverteilung des rechten Hauptscheinwerfers
- r: Kurvenradius
- a: optische Achse der Kamera
- α: halber Öffnungswinkel der Kamera

## Patentansprüche

1. Steuergerät zum Steuern und/oder Regeln von vertikalen Hell-Dunkel-Grenzen von Hauptscheinwerfem, wobei
- ein erster Hauptscheinwerfer wenigstens einen rechten Kraftfahrzeugscheinwerfer für Fernlicht und ein zweiter Hauptscheinwerfer einen wenigstens linken Kraftfahrzeugscheinwerfer für Fernlicht umfasst,
- an den Kraftfahrzeugscheinwerfer für Fernlicht mehrere einstellbare Lichtverteilungen einstellbar sind und
- das Steuergerät
- mit einer Schnittstelle zur Verbindung mit einer ersten Erkennungsvorrichtung zum Erkennen von vorrausfahrenden und/oder entgegenkommenden Fahrzeugen und
- mit einer Schnittstelle zur Verbindung mit den Kraftfahrzeugscheinwerfern,
- mit einer Schnittstelle zur Verbindung mit einer zweiten Erkennungsvorrichtung zum Erkennen eines Radius einer vom Kraftfahrzeug zu durchfahrenden oder durchfahrenen Kurve,
ausgestattet ist
- das Steuergerät geeignet und eingerichtet ist aufgrund eines Signals der ersten Erkennungsvorrichtung, das ein vorrausfahrendes und/oder entgegenkommendes Fahrzeug signalisiert, ein Stellsignal zu erzeugen, um zur Vermeidung einer Blendung die Kraftfahrzeugscheinwerfer für Fernlicht auszuschalten oder die vertikalen Hell-Dunkel-Grenzen der Lichtverteilung der Kraftfahrzeugscheinwerfer für Fernlicht zu verschieben,
**dadurch gekennzeichnet, dass**
- das Steuergerät ferner geeignet und eingerichtet ist in Abhängigkeit von einem Signal der zweiten Erkennungsvorrichtung, das den Radius der Kurve signalisiert, ein Stellsignal zu erzeugen, um zur Vermeidung einer Blendung entweder die rechten oder die linken Kraftfahrzeugscheinwerfer für Fernlicht auszuschalten.

2. Steuergerät nach Anspruch 1, **dadurch gekennzeichnet, dass** das Steuergerät eine Schnittstelle oder mehrere Schnittstellen zur Verbindung mit mindestens einem rechten Scheinwerfer für Fernlicht und mit mindestens einem linken Scheinwerfer für Fernlicht aufweist.

3. Steuergerät nach Anspruch 2, **dadurch gekennzeichnet, dass** das Steuergerät geeignet und eingerichtet ist bei einem eine Kurvenfahrt oder eine bevorstehende Kurvenfahrt anzeigenden Signal der zweiten Erkennungsvorrichtung ein Stellsignal zum Ausschalten des bei der Kurvenfahrt auf der Innenseite der Kurve liegenden Scheinwerfers für Fernlicht oder zum Verschieben der Hell-Dunkel-Grenze dieses Scheinwerfers zu erzeugen.

4. Steuergerät nach einem der Ansprüche 1 bis 3, **dadurch gekennzeichnet, dass** das Steuergerät geeignet und eingerichtet ist in Abhängigkeit vom Betrag des Kurvenradius, den das Signal der zweiten Erkennungsvorrichtung anzeigt, das Stellsignal zu erzeugen.

5. Steuergerät nach Anspruch 4, **dadurch gekennzeichnet, dass** das Steuergerät geeignet und eingerichtet das Stellsignal auch in Abhängigkeit eines Kamera-Öffnungswinkels des ersten Erkennungsmittels zu erzeugen.

6. Steuergerät nach Anspruch 5, **dadurch gekennzeichnet, dass** der Kamera-Öffnungswinkel als Berechnungsparameter in dem Steuergerät eingebbar, speicherbar und bei der Erzeugung der Stellgröße verarbeitbar ist.

7. Steuergerät nach einem der Ansprüche 1 bis 6, **dadurch gekennzeichnet, dass** ein oder mehrere Parameter einer oder mehrerer Lichtverteilungen des Scheinwerfers oder der Scheinwerfer für Fernlicht in dem Steuergerät eingebbar, speicherbar und bei der Erzeugung der Stellgröße verarbeitbar sind.

8. Anordnung umfassend ein Steuergerät nach einem der Ansprüche 1 bis 7, einer ersten Erkennungsvorrichtung, einer zweiten Erkennungsvorrichtung, wenigstens einem rechten Scheinwerfer für Fernlicht und wenigstens einem linken Scheinwerfer für Fernlicht.

9. Anordnung nach Anspruch 8, **dadurch gekennzeichnet, dass** die erste Erkennungsvorrichtung eine Kamera umfasst, deren Öffnungswinkel als Berechnungsparameter in dem Steuergerät eingegeben und gespeichert ist.

10. Anordnung nach Anspruch 8 oder 9, **dadurch gekennzeichnet, dass** die zweite Erkennungsvorrichtung eine Kamera umfasst, mittels derer der Radius einer bevorstehenden Kurvenfahrt ermittelbar ist.

11. Anordnung nach Anspruch 8 oder 9, **dadurch gekennzeichnet, dass** die zweite Erkennungsvorrichtung ein Lenkwinkelsensor, einen Gierratensensor und/oder einen Radwinkelsensor zur Ermittlung des Radius einer Kurvenfahrt aufweist oder dass die zweite Erkennungsvorrichtung Teil eines Lane-Departure-Warning-Systems ist.

12. Anordnung nach einem der Ansprüche 8 bis 11, **dadurch gekennzeichnet, dass** das Steuergerät und der bzw. die Scheinwerfer zum Einstellen einer horizontalen Hell-Dunkel-Grenze des bzw. der Scheinwerfer für Fernlicht geeignet und eingerichtet ist.

13. Anordnung nach einem der Ansprüche 8 bis 12, **dadurch gekennzeichnet, dass** das Steuergerät zum automatischen Ein- und Ausschalten der Fernlichtscheinwerfer geeignet und eingerichtet ist.

14. Anordnung nach einem der Ansprüche 8 bis 13, **dadurch gekennzeichnet, dass** die Lichtverteilung der Scheinwerfer für das Fernlicht mittels des Steuergeräts einstellbar ist.

15. Anordnung nach einem der Ansprüche 8 bis 14, **dadurch gekennzeichnet, dass** das Steuergerät und der bzw. die Scheinwerfer für Kurvenlicht geeignet und eingerichtet sind.

## Claims

1. Control unit for the control of vertical cut-off lines of headlamps, wherein
- A first headlamp comprises at least one right hand motor vehicle headlamp for high beam and a second headlamp comprises at least one left hand motor vehicle headlamp for high beam,
- On the motor vehicle headlamps for high beam, there are several adjustable light distributions adjustable and
- The control unit is equipped
o With an interface for the connection with a first detection unit for the recognition of vehicles driving ahead and/or oncoming vehicles and
o With an interface for the connection with the motor vehicle headlamps,
o With an interface for the connection with a second detection unit for the recognition of a radius of a bend to be taken or having been taken by the motor vehicle,
- The control unit is suitable for and equipped to generate a control signal to switch off the motor vehicle headlamps for high beam or to adjust the cut-off lines of the motor vehicle headlamps for high beam to avoid dazzling, subject to a signal of the first detection unit signalizing a vehicle driving ahead and/ or an oncoming vehicle,
**Characterized in that**
- Furthermore, the control unit is suitable and equipped for the generation of a control signal to switch off the motor vehicle headlamps for high beam or to adjust the cut-off lines of the motor vehicle headlamps for high beam to avoid dazzling, subject to a signal of the second detection unit signalizing the radius of the bend,

2. Control unit according to Claim 1, **characterized in that** the control device comprises an interface or several interfaces for the connection with at least one right hand headlamp for high beam and at least one left hand headlamp for high beam.

3. Control unit according to Claim 2, **characterized in that** the control unit is suitable and equipped for the generation of a control signal for the switching off of the headlamp for high beam being positioned on the inside of the bend during cornering or for the adjustment of the cut-off line of said headlamp subject to a signal from the second detection unit indicating cornering or imminent cornering.

4. Control unit according to one of the Claims 1 to 3, **characterized in that** the control unit is suitable and equipped for the generation of the control signal as a function of the value of the radius of the bend indicated by the signal of the second detection unit.

5. Control unit according to Claim 4, **characterized in that** the control unit is suitable and equipped for the generation of the control signal also as a function of a camera aperture angle of the first detection unit.

6. Control unit according to Claim 5, **characterized in that** the camera aperture angle as a parameter for calculation can be entered, stored, and processed for the generation of the control variable.

7. Control unit according to one of the Claims 1 to 6, **characterized in that** one or several parameters of one or several light distributions of the headlamp or the headlamps for high beam can be entered, stored, and processed for the generation of the control variable.

8. Arrangement comprising a control unit according one of the Claims 1 to 7, a first detection unit, a second detection unit, at least one right hand headlamp for high beam and at least one left hand headlamp for high beam.

9. Arrangement according to Claim 8, **characterized in that** the first detection unit comprises a camera, whose aperture angle is entered and stored as a parameter for calculation in the control unit.

10. Arrangement according to Claims 8 or 9, **characterized in that** the second detection unit comprises a camera by means of which the radius of an imminent drive through a bend can be determined.

11. Arrangement according to Claims 8 to 9, **characterized in that** the second detection unit comprises a steering angle sensor, a yaw rate sensor and/ or a wheel angle sensor for the determination of the radius of a drive through a bend or that the second detection unit is part of a lane-departure-warning system.

12. Arrangement according to one of the Claims 8 to 11, **characterized in that** the control unit and the headlamp or headlamps are suitable and equipped for the adjustment of a horizontal cut-off line of the headlamp or headlamps for high beam.

13. Arrangement according to one of the Claims 8 to 12, **characterized in that** the control unit is suitable and equipped for the automatic switching on and off of the high beam headlamp.

14. Arrangement according to one of the Claims 8 to 13 **characterized in that** the light distribution of the headlamps for high beam is adjustable by means of the control unit.

15. Arrangement according to one of the Claims 8 to 14, **characterized in that** the control unit and the headlamp or headlamps are suitable and equipped for bend lighting.

## Revendications

1. Boîtier électronique pour commander et/ou régler des coupures clair-obscur des projecteurs principaux,
- un premier projecteur principal comprenant au moins un projecteur droit des véhicules automobiles de feu de route et un deuxième projecteur principal des véhicules automobiles de feu de route,
- plusieurs répartitions lumineuses réglables sur les projecteurs des véhicules automobiles de feu de route étant réglables et
- le boîtier électronique étant équipé
- d'un interface pour la connexion à un premier dispositif de détection pour détecter des véhicules automobiles venant en sens inverse ou qui précèdent et
- d'un interface pour la connexion aux projecteurs des véhicules automobiles,
- d'un interface pour la connexion à un deuxième dispositif de détection pour détecter un rayon d'un virage à prendre ou d'un virage déjà pris,
- le boîtier électronique étant approprié et configuré en raison d'un signal du premier dispositif de détection à générer un signal de réglage qui signale un véhicule qui précède et/ou qui roule en sens inverse pour éteindre les projecteurs des véhicules automobiles de feu de route ou de déplacer les coupures clair-obscur verticales de la répartition lumineuse des projecteurs des véhicules automobiles de feu de route pour éviter un éblouissement
**caractérisé en ce que**
- le boîtier électronique est également approprié et configuré à générer un signal de réglage en fonction d'un signal du deuxième dispositif de détection qui signale le rayon d'un virage pour éteindre les projecteurs droits ou bien gauches des véhicules automobiles de feu de route pour éviter un éblouissement.

2. Boîtier électronique selon la revendication 1, **caractérisé en ce que** le boîtier électronique présente un interface ou plusieurs interfaces pour la connexion à au moins un projecteur droit de feu de route et à au moins un projecteur gauche de feu de route.

3. Boîtier électronique selon la revendication 2, **caractérisé en ce que** le boîtier électronique est approprié et configuré à générer un signal de réglage en cas d'un signal du deuxième dispositif de détection qui signale un virage ou un virage à venir pour éteindre le projecteur de route sur la face intérieure du virage ou pour déplacer la coupure clair-obscur de ce projecteur.

4. Boîtier électronique selon l'une des revendications 1 à 3, **caractérisé en ce que** le boîtier électronique est approprié et configuré à générer le signal de réglage en fonction du montant de rayon de virage indiqué par le signal du deuxième dispositif de détection.

5. Boîtier électronique selon la revendication 4, **caractérisé en ce que** le boîtier électronique est approprié et configuré à générer le signal de réglage également en fonction d'un angle d'ouverture d'une caméra du premier dispositif de détection.

6. Boîtier électronique selon la revendication 5, **caractérisé en ce que** l'angle d'ouverture de la caméra en tant que paramètre de calcul peut être introduit et mémorisé au boîtier électronique et traité lors de la génération de la grandeur de réglage.

7. Boîtier électronique selon l'une des revendications 1 à 6, **caractérisé en ce qu'**un ou plusieurs paramètres d'une ou de plusieurs répartitions lumineuses du ou des projecteurs de feu de route peuvent être introduits et mémorisés au boîtier électronique et traités lors de la génération de la grandeur de réglage.

8. Disposition comprenant un boîtier électronique selon l'une des revendications 1 à 7, un premier dispositif de détection, un deuxième dispositif de détection, au moins un projecteur droit de feu de route et au moins un projecteur gauche de feu de route.

9. Disposition selon la revendication 8, **caractérisée en ce que** le premier dispositif de détection comprend une caméra dont l'angle d'ouverture est introduit et mémorisé au boîtier électronique en tant que paramètre de calcul.

10. Disposition selon la revendication 8 ou 9, **caractérisée en ce que** le deuxième dispositif de détection comprend une caméra avec laquelle le rayon d'un virage à venir peut être déterminé.

11. Disposition selon la revendication 8 ou 9, **caractérisée en ce que** le deuxième dispositif de détection présente un capteur d'angle volant, un capteur du taux de lacet et/ou un capteur d'angle de roue pour déterminer le rayon d'un virage ou que le deuxième dispositif de détection fait partie d'un système d'avertissement de sortie de voie (Lane-Departure-Warning).

12. Disposition selon l'une des revendications 8 à 11, **caractérisée en ce que** le boîtier électronique et le ou les projecteurs sont appropriés et configurés à régler une coupure clair-obscur horizontale du respectivement des projecteurs de feu de route.

13. Disposition selon l'une des revendications 8 à 12, **caractérisée en ce que** le boîtier électronique est approprié et configuré à allumer et éteindre automatiquement les projecteurs de route.

14. Disposition selon l'une des revendications 8 à 13, **caractérisée en ce que** la répartition lumineuse des projecteurs de feu de route peut être réglée au moyen du boîtier électronique.

15. Disposition selon l'une des dispositions 8 à 14, **caractérisée en ce que** le boîtier électronique et le respectivement les projecteurs sont appropriés et configurés à l'éclairage de virage.
